# EUROPEAN PATENT APPLICATION

(11) **EP 2 657 056 A1**
(43) Date of publication of application: **30.10.2013**
(21) Application number: 11850615.3
(22) Date of filing: 03.11.2011
(51) Int. Cl.: B60J 11/04, B60J 11/00

(54) **CAR COVER**

(30) Priority: 23.12.2010 CN 201020674729 U; 17.01.2011 CN 201120011645 U; 17.01.2011 CN 201120011732 U; 11.02.2011 CN 201120036098 U; 21.02.2011 CN 201120042423 U; 08.04.2011 CN 201120101066 U; 29.06.2011 CN 201120222929 U; 28.07.2011 CN 201120270339 U; 04.08.2011 CN 201120280894 U; 04.08.2011 CN 201120280895 U; 16.09.2011 CN 201120347768 U
(71) Applicant: Zhou, Dalu, Zhejiang 317200 (CN)
(72) Inventor: Zhou, Dalu, Zhejiang 317200 (CN)
(74) Representative: Verscht, Thomas Kurt Albert
(86) International application number: PCT/CN2011/081724
(87) International publication number: WO 2012/083760

(57) **Abstract**

Disclosed in the present invention is a car cover, which comprises a cover body (9). A second cover (8) is provided on the cover body (9). A car-bottom soft sheet (1) is fixedly connected to the front-end of the cover body (9). Built-in fitments (2) of the car-bottom soft sheet are fixedly provided on the car-bottom soft sheet (I), and a number of cover built-in fitments (5) corresponding to the built-in fitments (2) of the car-bottom soft sheet are provided on the cover body (9). The cover body (8) is provided with a sleeve (6), and a soft strip (7) is provided in the sleeve (6). The two ends of the soft strip (7) are removably fixed to the two ends of car-bottom soft sheet (1). A box of the car cover, a bag of the car cover and a shed frame are also disclosed. The present invention can effectively prevent heat and hail, and can be realized in all-cover or half-cover type. Meanwhile, it can be used as a car shed, and comprises the box or bag of the car cover which are convenient and rapid in use. There are the following advantages: simple in structure, convenient and rapid in application and good in effect.

## Description

### Field of the invention

The present invention relates to an automobile thing, especially to a car cover, which can effectively prevent heat and hail, can be realized in all-cover or half-cover type, can be used as a car shed, and comprises the box or bag of the car cover.

### Background of the invention

With the increased of the owners of the car, or the limited of the space, many cars have to be parked outdoor. To decrease the damage to the car by the weather, when the car is parked outdoor, people will apply with a car cover to cover the car roof. The existing car cover is applied with common material with bad anti-freeze effect in winter and bad heat transferring effect in summer. Besides, the hail damages the car cover. The existing car cover does not have half-cover and full-cover type.

Recently, it is inconvenience to put a car cover with more than ten square meters into the car. Moreover, opening a car cover and spreading it well by hand are not easy. The existing bag of the car cover is commonly a bag with simple structure to accept the car cover only, and it can not accept the car cover fast.

### Summary of the invention

The object of the present invention is to overcome the disadvantages of the existing technology and provide with a car cover, which can effectively prevent heat and hail, and can be realized in all-cover or half-cover type, and can be used as a variable car shed, and comprises a box or a bag of the car cover.

The technical proposal of the present invention is as below:
A car cover includes a cover body, the cover body is disposed with a second cover, a car-bottom soft sheet is fixedly connected to the front end of the cover body, several built-in fitments of car-bottom are fixed to the car-bottom soft sheet, the cover body is disposed with several built-in fitments of the cover corresponding to the built-in fitments of the car-bottom soft sheet, the cover body is disposed with a sleeve, a soft strip is disposed inside the sleeve, the two ends of the soft strip are removably fixed to the two ends of car-bottom soft sheet.

For convenience to put the car cover away or open it, the front end of the cover body is fixed with a hard bar of front cover body, the back end of the cover body is fixed with a hard bar of back cover body.

For convenience to hold the car cover by the wind shield wiper, the front end of the cover body is fixed with a hard hook or a hard board.

For convenience to catch the car cover when putting it away or opening it, the front end and the back end of the cover body are separately fixed with at least a soft strip of the cover body.

In another preferred embodiment, the car cover further includes a box of the car cover, the box is a rectangular box with one side open, the four longer sides of the box are separately fixed with a hard bar of` the box, a supporting bar perpendicular to the hard bar of the box is disposed at the bottom of the box, one end of the open side of the box is fixed with a soft sheet of the box, the other end of the soft sheet of the box is connected with a handle of the hard bar, the handle is disposed with a Velcro of the handle of the hard bar, the box is disposed with a Velcro of the inside box corresponding to the Velcro of the handle of the hard bar, the box is disposed with a Velcro of the bottom box in the end face neighbor to the soft sheet of the box, the end face opposite to the above end face is disposed with a Velcro of the top box, the outer side of the end face with the Velcro of the top box is disposed with at least four hard sheets, the hard sheets are disposed with a hole, the top of the box is disposed with a ring, the bottom and the top of the box are fixedly connected to the soft strip of the box, the soft strip of the box is running through the hole of the hard sheet and the ring. In another preferred embodiment, the car cover further includes a bag of the car cover, the bag includes a soft bag, the bag is disposed with an opening, one end of the opening is fixed with a first hard bar, an elastic band is disposed between the first hard bar and the other end of the opening, the other end of the opening is fixed with a second hard bar, the soft bag is disposed with a lock hole, the lower end of the lock hole and the soft bag are separately disposed with a Velcro interaction to each other, two ends of the soft bag are separately fixed with two elastic hard strips inside the soft bag, a soft strip of the bag is fixed inside the soft bag, the soft strip of the bag is disposed with a Velcro.

In another preferred embodiment, the car cover further includes a bag of the car cover, the bag includes a soft bag with an opening, the edge of the soft bag is disposed with a rope, the soft bag is disposed with two elastic hard sheet of mutually perpendicular, two ends of one elastic hard sheet are separately disposed with a Velcro, two ends of the other elastic hard sheet are separately disposed with a circular elastic hard sheet, the central of the soft bag is disposed with two wrap soft sheets, the other ends of the two wrap soft sheets are separately fixed with a hard push bar, the outer side of the soft bag is disposed with a cover board of the bag, the cover board of the bag is fixed with a hard bar of the cover board of the bag.

In another preferred embodiment, the car cover further includes two carports, each carport includes a built-in hard board, the built-in hard board is fixed with a limiting hard bar, the limiting hard bar is removably connected to a hard bend sleeve, the hard bend sleeve is removably connected to the hard supporting bar.

In another preferred embodiment, the cove body is disposed with an elastic cloth or several parallel elastic stings, the elastic strings are perpendicular to the hard bar of the front cover body, a cloth sheet of impact resistance and freeze proofing is disposed with the two neighbor elastic strings.

In another preferred embodiment, the hard bar of the front cover body, the hard bar of the back cover body, the first hard bar, the second hard bar and the limiting hard bar are separately expansion hard bar.

A car-bottom soft sheet with thermal insulation function is disposed to one end of the car body, put it to the bottom of the car head, fix it by the built-in fitments of the car-bottom soft sheet and the built-in fitments of the cover body, the car-bottom soft sheet can be effectively thermal insulated. With the cloth of impact resistance and freeze proofing, the car cover can effectively prevent from the hail to the car. The car-bottom soft sheet does not need to be put in the bottom of the car head when used to be full-cover or half-cover used. Two carports can conveniently support the car cover as a carport for better heat transferring of the car or for convenience of the people to get out of the sun, besides, with the box and the bag of the car cover specifically designed, the car cover can be accepted fast.

In summary, the present invention can effectively prevent heat and hail, can be realized in all-cover or half-cover type, can be used as a car shed, and comprises the box or bag of the car cover with simple structure, convenient and rapid in application and good in effect.

### Brief description of the drawings

Fig.1 illustrates the structure of the first embodiment of the present invention;
Fig.2 illustrates the structure of the box of the car cover of the second embodiment of the present invention;
Fig.3 illustrates the back view of the fig.2;
Fig.4 illustrates the structure of the bag of the car cover of the third embodiment of the present invention;
Fig.5 illustrates the structure of the bag in close state of the fig.4;
Fig.6 illustrates the structure of the bag of the car cover of the fourth embodiment of the present invention;
Fig.7 illustrates the structure of the carport of the fifth embodiment of the present invention;

### Detailed description of the embodiments

### The first embodiment

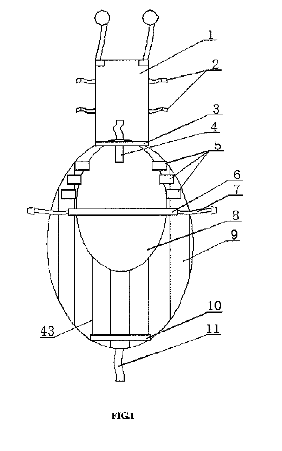

As figured in the fig.1, a car cover includes a cover body 9, the cover body 9 is disposed with a second cover body 8, a car-bottom soft sheet I is fixedly connected to the front end of the cover body 9, several built-in fitments 2 of the car-bottom soft sheet are fixed to the car-bottom soft sheet 1, several built-in fitments 5 of the cover body corresponding to the built-in fitments 2 of the car-bottom soft sheet are disposed in the cover body 9. the cover body 9 is disposed with a sleeve 6, a soft strip 7 is disposed inside the sleeve 6, two ends of the soft strip 7 are removably fixed to the two ends of the car-bottom soft sheet 1. It can be applied with a Velcro between the built-in fitments 2 of the car-bottom soft sheet and the built-in fitments 5 of the cover body and between the soft strip 7 and the car-bottom soft sheet 1.

For convenience to put the car cover away or open it, the front end of the cover body 9 is fixed with a hard bar 3 of the front cover, the back end of the cover body 9 is fixed with a hard bar 10 of the back cover.

For convenience to hold the car cover by the wind shield wiper, the front end of the cover body 9 is fixed with a hard hook or a hard board 4.

For convenience to catch the car cover when putting it away or opening it, the front end and the back end of the cover body 9 are separately fixed with at least a soft strip 11 of the cover body.

The cover body 9 is disposed with an elastic cloth or several parallel elastic stings 43, the elastic strings 43 are perpendicular to the hard bar 3 of the front cover body, a cloth sheet of impact resistance and freeze proofing is disposed with the two neighbor elastic strings. An elastic rope 91 is disposed in the back edge of the cover body 9. The second cover body 8 is directly coated on the cover body 9, the car-bottom soft sheet 1 of the front end of the cover body 9 can be removably connected to the cover body 9.

When used, fix the hard bar 10 of the back cover body 9 to the back of the car, hand the hard bar 3 to pull the cover to the front of the car, if full-cover required, pull the cover body 9 to the lower of the front of the car by the hard bar 3, fix one end of the soft strip 7 to the lower of the front of the car, the soft strip 7 overcomes the elastic force of the elastic string, the car cover is full opened to be full-cover used.

If heat preservation is needed at the bottom of the car, put the car-bottom soft sheet I with thermal insulation function to the bottom of the car head, fix the two ends of the soft strip 7 and the two ends of the car-bottom soft sheet 1, it can be applied with a Velcro between the built-in fitments 2 of the car-bottom soft sheet and the built-in fitments 5 of the cover body and between the soft strip 7 and the car-bottom soft sheet 1. It can be effectively thermal insulated. With the cloth of impact resistance and freeze proofing, the car cover can effectively prevent from the hail to the car.

When the temperature is high and half-cover type is needed, pull the hard bar 3 to the lower end of the front windshield of the car, and fix the hard hook or the hard board 4 in the front of the cover body 9 by the windshield wiper, the cover body 9 is fixed in the review mirrors of the two sides of the car and the upper of the front windshield, making the soft cover body coated on the car body in the back of the hood with half-type style.

### The second embodiment

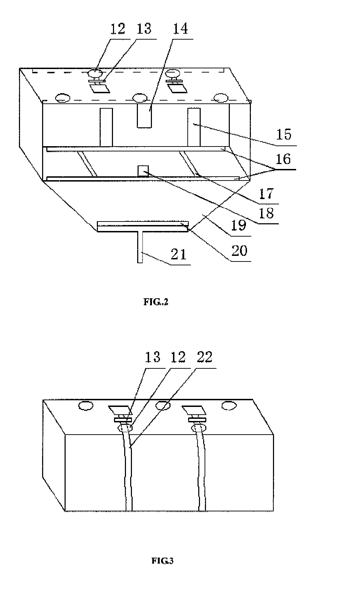

As figured in the fig.2 and fig.3, a car cover further includes a box of the car cover, the box is a rectangular box with one side open, the four longer sides of the box are separately fixed with a hard bar 16 of the box, a supporting bar 17 perpendicular to the hard bar 16 of the box is disposed at the bottom of the box, one end of the open side of the box is fixed with a soft sheet 19 of the box, the other end of the soft sheet19 of the box is connected with a handle 21 of the hard bar, the handle 21 is disposed with a Velcro. 20 of the handle of the hard bar, the box is disposed with a Velcro 15 of the inside box corresponding to the Velcro 20 of the handle of the hard bar, the box is disposed with a Velcro 18 of the bottom box in the end face neighbor to the soft sheet 19 of the box, the end face opposite to the above end face is disposed with a Velcro 14 of the top box, the outer side of the end face with the Velcro 14 of the top box is disposed with at least four hard sheets 12, the hard sheets 12 are disposed with a hole, the top of the box is disposed with a ring 13, the bottom and the top of fhe box are fixedly connected to the soft strip 22 of the box, the soft strip 22 of the box is running through the hole of the hard sheet 12 and the ring 13. the joining of the box of the car cover is disposed with waterproof work, the cover body 9 can be accepted in the box.

### The third embodiment

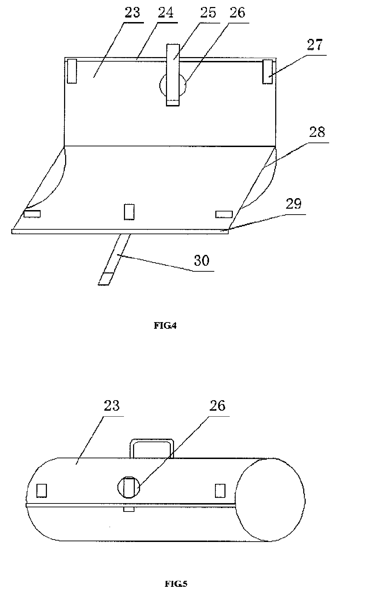

As figured in the fig.4 and fig.5, the car cover further includes a bag, the bag includes a soft bag 23, the bag 23 is disposed with an opening, one end of the opening is fixed with a first hard bar 29, an elastic band 28 is disposed between the first hard bar 29 and the other end of the opening, the other end of the opening is fixed with a second hard bar 27, the soft bag 23 is disposed with a lock hole 26, the lower end of the lock hole 26 and the soft bag 23 are separately disposed with a Velcro 25 interaction to each other, two ends of the soft bag 23 are separately fixed with two elastic hard strips 27 inside the soft bag, a soft strip 30 of the bag is fixed inside the soft bag 23, the soft strip 30 of the bag is disposed with a Velcro. The joining of the bag of the car cover is disposed with waterproof work, the cover body 9 can be accepted in the bag.

### The forth embodiment

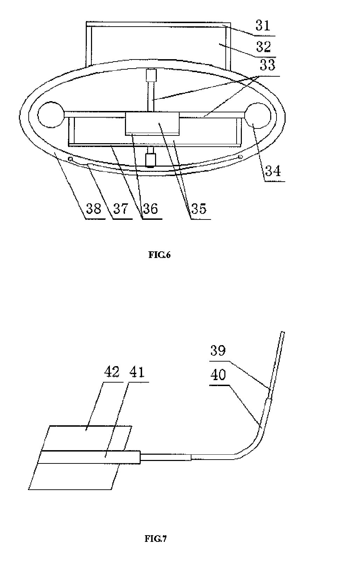

As figured in the fig.6, the car cover further includes a bag, the bag includes a soft bag 38 with an opening, the edge of the soft bag 38 is disposed with a rope 37, the soft bag 38 is disposed with two elastic hard sheet 33 of mutually perpendicular, two ends of one elastic hard sheet are separately disposed with a Velcro, two ends of the other elastic hard sheet are separately disposed with a circular elastic hard sheet 34, the central of the soft bag 38 is disposed with two wrap soft sheets 35, the other ends of the two wrap soft sheets 35 are separately fixed with a hard push bar 36, the outer side of the soft bag 38 is disposed with a cover board 32 of the bag, the cover board 32 of the bag is fixed with a hard bar 31 of the cover board of the bag. The joining of the bag of the car cover is disposed with waterproof work, the cover body 9 can be accepted in the bag.

### The fifth embodiment

As figured in the fig.7, the car cover further includes two carports, each carport includes a built-in hard board 42, the built-in hard board 42 is fixed with a limiting hard bar 41, the limiting hard bar 41 is removably connected to a hard bend sleeve 40, the hard bend sleeve 40 is removably connected to the hard supporting bar 39.

The hard bar 3 of the front cover body, the hard bar 10 of the back cover body, the first hard bar 29, the second hard bar 24 and the limiting hard bar 41 are separately expansion hard bar.

When used, the two carports are separately placed in the two ends front and back to fix the hard board 42 to the ground, two supporting bars 39 are separately withstood the hard bar 3 of the front cover body and the inside of the hard bar 10 of the front cover body, open the car cover to form a carport for better heat transferring of the car or for convenience of the people to get out of the sun.

### Industrial applicability

The car cover of the present invention can effectively prevent heat and hail, can be realized in all-cover or half-cover type, can be used as a car shed, and comprises the box or bag of the car cover with simple structure, convenient and rapid in application and good in effect.

## Claims

1. A car cover, wherein includes a cover body, the cover body is disposed with a second cover, a car-bottom soft sheet is fixedly connected to the front end of the cover body, several built-in fitments of car-bottom are fixed to the car-bottom soft sheet, the cover body is disposed with several built-in fitments of the cover corresponding to the built-in fitments of the car-bottom soft sheet, the cover body is disposed with a sleeve, a soft strip is disposed inside the sleeve, the two ends of the soft strip are removably fixed to the two ends of car-bottom soft sheet.

2. A car cover according to the claim 1, wherein the front end of the cover body is fixed with a hard bar of front cover body, the back end of the cover body is fixed with a hard bar of back cover body.

3. A car cover according to the claim 1, wherein the front end of the cover body is fixed with a hard hook or a hard board.

4. A car cover according to the claim 1, wherein the front end and the back end of the cover body are separately fixed with at least a soft strip of the cover body.

5. A car cover according to the claim 1, wherein further includes a box of the car cover, the box is a rectangular box with one side open, the four longer sides of the box are separately fixed with a hard bar of the box, a supporting bar perpendicular to the hard bar of the box is disposed at the bottom of the box, one end of the open side of the box is fixed with a soft sheet of the box, the other end of the soft sheet of the box is connected with a handle of the hard bar, the handle is disposed with a Velcro of the handle of the hard bar, the box is disposed with a Velcro of the inside box corresponding to the Velcro of the handle of the hard bar, the box is disposed with a Velcro of the bottom box in the end face neighbor to the soft sheet of the box, the end face opposite to the above end face is disposed with a Velcro of the top box, the outer side of the end face with the Velcro of the top box is disposed with at least four hard sheets, the hard sheets are disposed with a hole, the top of the box is disposed with a ring, the bottom and the top of the box are fixedly connected to the soft strip of the box, the soft strip of the box is running through the hole of the hard sheet and the ring.

6. A car cover according to the claim 1, wherein further includes a bag of the car cover, the bag includes a soft bag, the bag is disposed with an opening, one end of the opening is fixed with a first hard bar, an elastic band is disposed between the first hard bar and the other end of the opening, the other end of the opening is fixed with a second hard bar, the soft bag is disposed with a lock hole, the lower end of the lock hole and the soft bag arc separately disposed with a Velcro interaction to each other, two ends of the soft bag are separately fixed with two elastic hard strips inside the soft bag, a soft strip of the bag is fixed inside the soft bag, the soft strip of the bag is disposed with a Velcro.

7. A car cover according to the claim 1, wherein further includes a bag of the car cover, the bag includes a soft bag with an opening, the edge of the soft bag is disposed with a rope, the soft bag is disposed with two elastic hard sheet of mutually perpendicular, two ends of one elastic hard sheet are separately disposed with a Velcro, two ends of the other elastic hard sheet are separately disposed with a circular elastic hard sheet, the central of the soft bag is disposed with two wrap soft sheets, the other ends of the two wrap soft sheets are separately fixed with a hard push bar, the outer side of the soft bag is disposed with a cover board of the bag, the cover board of the bag is fixed with a hard bar of the cover board of the bag.

8. A car cover according the claim 1, wherein further includes two carports, each carport includes a built-in hard board, the built-in hard board is fixed with a limiting hard bar, the limiting hard bar is removably connected to a hard bend sleeve, the hard bend sleeve is removably connected to the hard supporting bar.

9. A car cover according to the claim 1, wherein the cove body is disposed with an elastic cloth or several parallel elastic stings, the elastic strings are perpendicular to the hard bar of the front cover body, a cloth sheet of impact resistance and freeze proofing is disposed with the two neighbor elastic strings.

10. A car cover according to the claim 2, claim 6 or claim 8, wherein the hard bar of the front cover body, the hard bar of the back cover body, the first hard bar, the second hard bar and the limiting hard bar are separately expansion hard bar.

11. A car cover according to the claim 2, claim 6 or claim 8, wherein the second cover is directly coated on the cover body.
